# EUROPEAN PATENT APPLICATION

(11) **EP 2 172 330 A1**
(43) Date of publication of application: **07.04.2010**
(21) Application number: 09011969.4
(22) Date of filing: 20.09.2009
(51) Int. Cl.: B32B 5/18, B32B 18/00, E04F 13/14, E04F 15/02

(54) **An insulating tile and a method of providing a surface with tiles**

(30) Priority: 22.09.2008 NL 1035966
(71) Applicant: Hilbrink, Jan Willem, 3991 MZ Houten (NL)
(72) Inventor: Hilbrink, Jan Willem, 3991 MZ Houten (NL)
(74) Representative: Altenburg, Bernardus Stephanus Franciscus

(57) **Abstract**

The present invention relates to an insulating tile, having a first side with a first main surface and an opposite second side with a second main surface, said first side being comprised of a stone or ceramic material comprising layer, said stone or ceramic material comprising layer being connected to a thermally insulating hard foam material. The tile is **characterized in that** said thermally insulating hard foam material is connected to a vapour proof material which forms said second side.

According to a preferred embodiment the tile is sloped due to a sloped insulating layer. The tile may be laid with jointing elements that are inserted in a sidewall of the tile. The tile can be used for paving a base layer such as a roof terrace or a wall of a building.

## Description

The present invention relates to an insulating tile as mentioned in the preamble of claim 1. The invention also relates to a jointing element, to a set comprising same and to methods for paving a floor and finishing a wall.

The tile as mentioned above is known from DE 29 822 831. Said known tile was developed for indoor applications. Since it comprises a layer of wood or polystyrene, outdoor application is explicitly excluded.

The present invention aims at providing a tile with an enhanced applicability.

The present invention especially aims at providing a tile, suitable for both outdoor use and indoor use where wet and/or cold conditions can be expected.

The present invention further aims at providing a tile that has a high strength and can also be used on a loose or non-level surface, e.g. sand.

The present invention therefore provides a tile with the features as mentioned in claim 1. It has been found that the use of e vapour proof layer at the second side of the second layer prevents water vapour from reaching the boundary layer of the stone or ceramic material comprising layer and the layer of hard foam material to the extent that under freezing conditions the connection between the first layer and the second layer is not broken, as it would otherwise have occurred. Also, the thermally insulating properties of the tile are improved because less water is present in the second layer. Surprisingly, the sidewalls of the tile according to the invention need not be covered with a vapour proof material to obtain these advantageous effects. This allows a tile according to the invention to be cut and/or sawed at the required size, both for manufacturing purposes and when laying tiles. A tile according to the invention may be used on a roof terrace. Rainwater will mostly be drained over the surface of the tiles. Any rainwater flowing away through slits between adjacent tiles may. Excess water accumulating under the tiles will be protected from freezing because it is on top the roof. Any water in the slits between the tiles is still able to evaporate with relative ease. The tiles according to the present invention may be laid without glue. In general, the first main side of the first layer and the second main side of the second layer are mainly parallel.

In the prsent application, the term "vapour proof material" or layer means a material that has a water vapour blocking capacity with a mu.D value of at least 75 m, preferably at least 200 m and more preferably at least 500 m (as can be determined in accordance with the standard EN12086). A very suitable vapour proof layer is for example a plastic film provided with a metal coating, or a layer of cured epoxy resin. Preferably the vapour proof layer is an aluminium layer. The vapour proof layer will in general cover at least 80% of the surface area of the second side of the second layer, preferably at least 90% and more preferably at least 95%, about 100% being most preferred. Any surface area not covered is preferably surface area near the edges of the tile. Preferably any surface area not covered is for at least 50% within a distance from the circumference of the tile equal to the thickness of the second layer. A tile according to the invention will in general have a rectangular shape, which includes a square shape, although other esthetical forms are possible. The first layer will have a mu value larger than the mu value of the second layer.

When laying tiles on a sand base layer, some settling of the sand base layer over time will occur. As a consequence, the tiles are not evenly supported anymore and tilting may occur when the tiles are subjected to loads. It in particularly then is advantageous if the tile comprises a layer of reinforcing material. Preferably, said layer of reinforcing material is at the opposite side of the first main side of the second layer, such as connected to the second main side of the second layer.

For the same reason, to reduce noise, or to compensate for the effect of an uneven (hard) surface onto which the tiles have been laid, it is advantageous if the tile comprises a layer of cushioning material. According to a preferred embodiment to compensate for an uneven base surface onto which tiles are laid, said layer of cushioning material is at the opposite side of the first main side of the second layer.

The material the first layer comprises a stone or ceramic material comprising layer, which may for example be chosen from flag, granite, artificial stone, resin based artificial stone, concrete, or cement based material. Artificial stone is a material comprising stones, grid, pieces of granite, flint, flag and the like, and which is resin or cement bonded. It is preferred that the first layer has a closed surface so as to make it impermeable for liquids. This is not an absolute requirement, as any water reaching the boundary between the first layer and the second layer may dissipate in the reverse direction. The first layer is typically a layer of ceramic or natural stone.

A convenient and comfortable floor may be obtained with a tile comprising a heating element, chosen from heating hoses and heating wires, preferably provided in said thermal insulating material or between said thermal insulating material and said ceramic layer. Especially in icy conditions, a heating element will ease removal of snow and ice from the tiles. Turning the heating element on for a time sufficient to melt an ice or snow layer on top of the tile, i.e. to increase the temperature to a value of just above 0 degree C, will enable one to remove the said layer of ice or snow. It may make a roof terrace a nice place to be for a longer period of time during the year.

A preferred tile is obtained when, as a hard foam material, said thermally insulating material is chosen from extruded polystyrene, polyurethane or another insulating hard foam material, like foamed concrete or cellular glass. These materials can be produced such that they provide thermal insulation as well as long-term durability.

According to a preferred embodiment, the tile is at the second main side of the vapour proof layer provided with grooves ending at the circumference of the tile.

This allows water below a tile to be drained away or evaporate, reducing the chance of entering the second layer.

For providing a stable floor of tiles, it is preferred that a sidewall of said tile comprises a profile for cooperative coupling with a sidewall of a neighbouring tile. Then, neighbouring tiles can be interconnected which improves the stability of the tile floor. Preferably, said profile is comprised of a groove in a sidewall of a first tile for receiving a protruding element in a sidewall of a neighbouring tile. According to a further preference, said protruding element may be comprised of a separate jointing element such as a strip, e.g. an aluminium strip, provided for cooperation with a groove of a neighbouring tile. For then, all tiles can be produced identically, with grooves in at least two but preferably all sidewalls, and wherein such separate jointing element are introduced in both grooves for interconnecting neighbouring tiles.

If the tile is to be used for outside use, it may be preferred to provide some slope in the tile, for easing drain of rainwater and the like. Such can most easily be obtained with a rectangular tile having two opposite sidewalls, comprising a sloped layer of insulating material such that said layer of insulating material has a first thickness at a first sidewall and a second thickness, different from said first thickness at said opposite sidewall. As a matter of fact, it is especially preferred that neighbouring tiles have a same height of adjacent sidewalls. For then the tiles can be laid on a level sand floor or other base layer.

The strip or similar jointing element may have a length that is much less than the length of a sidewall of a tile, so as to provide for open joints between tiles. However, it may also have a length that is substantially longer than the length of a sidewall of a tile, for example at least two tiles, at least three tiles or even more. Then, it will enable a straight laying of tiles.

As a matter of fact, it is especially preferred if the strip is provided with stiffening rib perpendicular to the strip and extending in a longitudinal direction of said strip. This provides for an increased rigidity in a direction perpendicular to the main surface of the tile.

The invention also relates to a method of providing a surface with tiles, comprising positioning a first and a second tile adjacent to each other, with an element protruding from the first tile into a profile in the sidewall of the second tile.

This restricts the relative movement of the adjacent tiles in at least one direction. The surface is for example the surface of soil, a roof terrace, or an outwardly facing side of a wall of a building.

According to a preferred embodiment the element is a strip, and both the first and the second tile have a profile capable of receiving said strip.

More preferably, the strip is provided with stiffening rib perpendicular to the strip and extending in a longitudinal direction of said strip.

This is all explained above.

The present invention will now be illustrated with reference to the schematic drawing where
fig. 1 shows a perspective view of a tile according to a first embodiment of the invention,
fig. 2 shows an enlarged partial view of a tile according to a second embodiment of the invention,
fig. 3 shows a top view of the tile shown in fig. 2, and
fig. 4 shows a side view of a tile according to a fourth embodiment of the invention.

The figures are only intended to provide a schematic view of a tile according to the invention. The figures are not drawn to scale. The same parts are indicated with the same reference numerals in the figures.

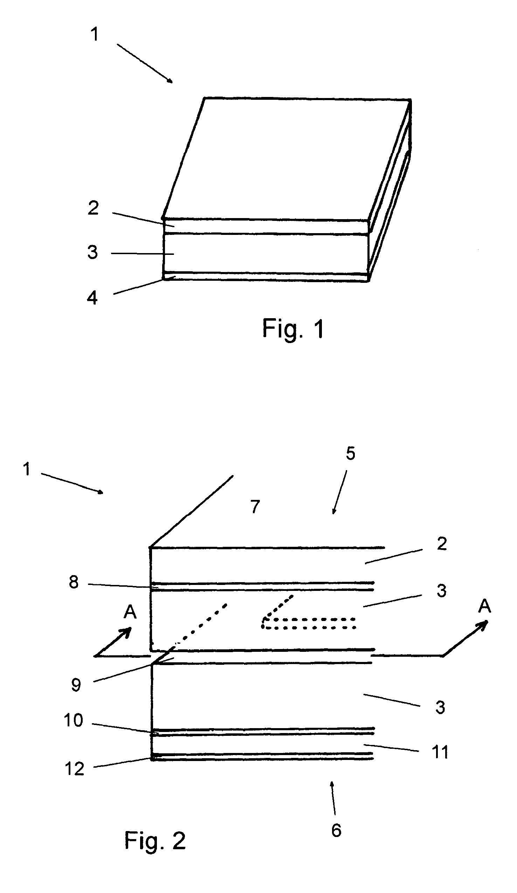

A general view of a tile 1 according to the invention is shown in fig. 1. The tile 1 is comprised of a top layer 2, which can be comprised of a stone or ceramic material comprising layer. This top layer 2 is connected to a layer 3 of hard foam. Suitable hard foam materials are for example extruded polystyrene, polyurethane, foamed concrete and cellular glass. The layer 4 at the bottom side of the tile 1 as shown in fig. 1, to wit at the second main side of the layer 3 facing away from the top layer 2, comprises a vapour proof material, that is a water vapour blocking material.

According to the invention, the term vapour proof material means a material having a higher water vapour blocking capacity than the hard foam material of layer 3. In particular, the material of layer 4 may have a water repellent characteristic, due to a hydrophobic character. A preferred material is aluminium foil, which may be glued to the second layer 3.

Fig. 2 shows a preferred embodiment of the tile 1 according to the invention. The tile 1 comprises a first side 5 and a second, oppositely positioned side 6. The first side provides a first main surface 7, whereas the second side provides a second main surface (not visible in the figure). The layer 2 at the first side 5 is comprised of a stone like material. It is connected to a reinforcement layer 8. A suitable material for reinforcement layer 8 is a glass fibre netting. At the surface of the reinforcement layer 8 facing away from the top layer 2, a layer 3 of hard foam material is connected.

This layer 3 comprises a groove 9 along its sidewall. The depth of the groove 9 can be varied, depending on a jointing element, that will be described hereafter, to be inserted therein.

The layer 3 is, at its side facing away from the top layer, connected to another reinforcement layer 10. Then, the reinforcement layer 10 is connected to a cushioning layer 11, that in its turn is connected to a layer 12 of water vapour blocking material. An alternative embodiment, not shown, provides for interchanging layers 11 and 12, such that cushioning layer 11 is at the second side 6 of the tile 1.

The tile 1 as shown in Fig. 2 comprises many layers which are not all necessary in practice. In general, one reinforcement layer 8; 10 is sufficient to provide a sufficient strength to the tile 1.

According to a further preferred embodiment, not shown in this figure, the cushioning layer provides for the water vapour blocking capacity. Then, only one layer 11, 12 is required.

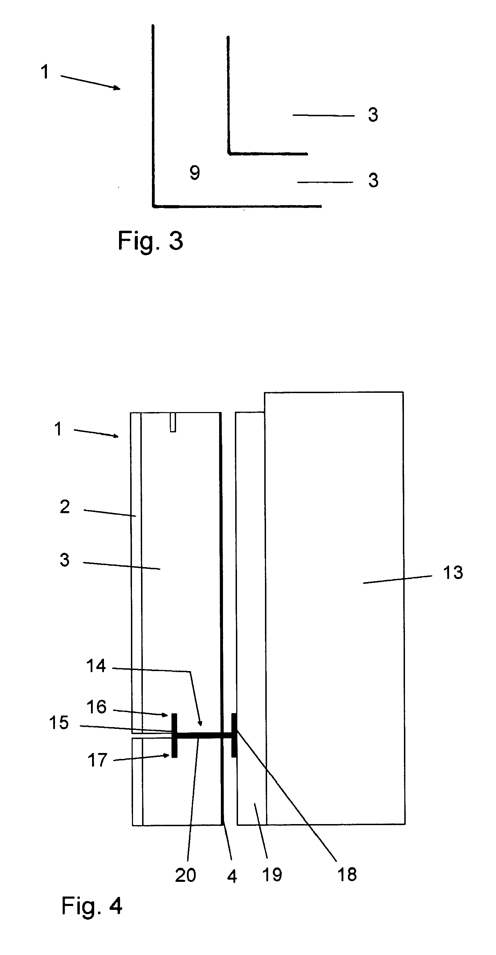

Fig. 3 shows a schematic top view of the tile 1 in the direction of the arrow A-A. The depth of the groove 9 in the layer 3 of hard foam material is schematically shown.

Fig. 4 shows a tile 1, comprising a top layer 2, a layer of insulating material 3 and a layer of vapour proof material 4, according to the invention, attached to a wall 13. An H-profile is used as a jointing element 14. One end 16 of a leg 15 of said H-profile is inserted into a groove 9 of said tile 1. Another end 17 of said same leg 15 is inserted into a neighbouring tile 1'. Another leg 18 of said jointing element 14 is connected to the wall 13, through an intermediate lath 19. The interconnecting bridge 20 provides for a distance between the tile 1, 1' and the wall 13 or lath 19.

The jointing element as used in the embodiment of fig. 4, may be a continuous element, stretching over the complete sidewall of the tile, both in horizontal and vertical directions. That way, a thorough protection against rainwater entering the space between the tile 1 and the wall 13 is obtained. The jointing element may also have a length of at least two tiles, for example three tiles, or even more. A similar embodiment may be used when paving a floor, but then it generally is advisable to use jointing elements that leave open some parts of the joints between tiles, so as to enable rainwater to flow away and to enable water accumulating under the tiles and in between joints, to evaporate.

When laying tiles on a floor, not shown, a jointing element in the form of an I or T profile may be used. Both ends of an I profile may respectively be inserted in grooves of neighbouring tiles, providing a stable floor of tiles 1.

When laying tiles 1 on a base layer of sand, a T profile may be used. A T-profile (not shown) comprises a first leg with a first end and a second end, and a second leg connected to said first leg at an intermediate position of said first leg. A free end of said second leg extends generally perpendicularly from said first leg. A first end of said first leg is inserted into a groove of a first tile and a second end is inserted into a groove of a second, neighbouring tile. A free end of said second leg can be inserted into the sand. This provides for a stable floor of tiles. The thickness of the second leg of the T or H profile determines the width of the joint between the tiles.

A man skilled in the art will be able to choose suitable types of glue or cement for connecting the layers of material to each other. Also further amendments can be made to the invention as described herein. For example, the sidewall of a tile can be provided with a double groove, which requires a jointing element with a double set of first legs, the ends thereof to be inserted into said grooves.

## Claims

1. An insulating tile (1) comprising a stack of layers, said stack comprising
- a first layer (2) having a first main side and an opposite second main side and comprising a material chosen from the group consisting of stone and ceramic
- a second layer (3) having a first main side and an opposite second main side and comprising a thermally insulating hard foam material, the first main side of the second layer (3) being connected to the second main side of said first layer (2),
**characterized in that** the second layer (3) is provided with a vapour proof layer (4), the vapour proof layer (4) having a first main side and an opposite second main side, the first main side of the vapour proof layer (4) being connected to the second main side of the second layer (3).

2. The insulating tile according to claim 1, comprising a layer of reinforcing material (8).

3. The insulating tile according to claim 2, wherein said layer of reinforcing material (8) is at the opposite side of the first main side of the second layer (3).

4. The insulating tile according to any of the preceding claims, comprising a layer of cushioning material.

5. The insulating tile according to claim 5, wherein said layer of cushioning material is at the opposite side of the first main side of the second layer (3).

6. The insulating tile according to any of the preceding claims, wherein the stone or ceramic material comprising layer comprises at least one of flag, granite, artificial stone, resin based artificial stone, concrete, or cement based material.

7. The insulating tile according to any of the preceding claims, wherein said tile comprises a heating element, chosen from heating hoses and heating wires, preferably provided in said thermal insulating material or between said thermal insulating material and said ceramic layer.

8. The insulating tile according to any of the preceding claims, wherein a sidewall of said tile comprises a profile for cooperative coupling with a sidewall of a neighbouring tile.

9. The insulating tile according to any of the preceding claims, wherein said thermally insulating material is chosen from at least one of extruded polystyrene, polyurethane, foamed concrete and cellular glass.

10. The insulating tile according to any of the preceding claims, wherein the tile is at the second main side of the vapour proof layer (4) provided with grooves ending at the circumference of the tile (1).

11. The insulating tile according to any of claims 1-9, wherein said tile is rectangular having two opposite sidewalls, comprising a sloped layer of insulating material such that said layer of insulating material has a first thickness at a first sidewall and a second thickness, different from said first thickness at said opposite sidewall.

12. A method of providing a surface with tiles, comprising positioning a first and a second tile adjacent to each other, with an element protruding from the first tile into a profile in the sidewall of the second tile.

13. The method according to claim 12, wherein the element is a strip, and both the first and the second tile have a profile capable of receiving said strip.

14. The method according to claim 13, wherein the strip is provided with stiffening rib perpendicular to the strip and extending in a longitudinal direction of said strip.
